(19) Europäisches Patentamt
European Patent Office
Office européen des brevets

(11) **EP 0 932 033 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(51) Int Cl.$^7$: **G01G 19/12**

(21) Anmeldenummer: **98123713.4**

(22) Anmeldetag: **12.12.1998**

(54) **Verfahren und Vorrichtung zur Bestimmung der Masse eines Kraftfahrzeuges**

Method and apparatus for determining the mass of a vehicle

Procédé et appareil pour la détermination de la masse d'un véhicule

(84) Benannte Vertragsstaaten:
**DE FR GB IT**

(30) Priorität: **24.01.1998 DE 19802630**

(43) Veröffentlichungstag der Anmeldung:
**28.07.1999 Patentblatt 1999/30**

(73) Patentinhaber: **DaimlerChrysler AG**
**70567 Stuttgart (DE)**

(72) Erfinder:
- **Rieker, Heinz**
  **71111 Waldenbuch (DE)**
- **Schützner, Paul Dr.**
  **73728 Esslingen (DE)**
- **Stoll, Joseph**
  **71686 Remseck (DE)**

(56) Entgegenhaltungen:
**EP-A- 0 142 633        EP-A- 0 666 435**
**DE-A- 4 228 413        US-A- 5 610 372**

EP 0 932 033 B1

**Beschreibung**

Die Erfindung betrifft ein Verfahren und eine Vorrichtung zur Bestimmung der Masse eines durch Vortriebskräfte in seine Längsrichtung bewegten Kraftfahrzeuges mit den Merkmalen des Oberbegriffes des Anspruches 1.

Für eine Vielzahl von Regelungs- und/oder Steuerungseinrichtungen, die verschiedene Fahrzeugteilsysteme beeinflussen, ist zur Optimierung ihrer Funktionsweise die Kenntnis von aktuellen Werten der Fahrzeugmasse und der Fahrbahnsteigung von erheblicher Bedeutung. Derartige Fahrzeugteilsysteme, bei denen die Fahrzeugmasse und/ oder die Fahrbahnneigung einen Regel- und/oder Steuerparameter bilden, sind bspw. eine Geschwindigkeitsregelanlage, eine Fahrdynamik-Regelstrategie wie z.B. Anti-Blockier-Systeme, Antriebsschlupfregelsysteme, eine Hinterradlenkung, eine Vorderradlenkung, Systeme zur Einstellung des optimalen Reifendrucks, eine Getriebesteuerung mit verschiedenen Schaltstrategien und ein Federungssystem.

Von besonderer Bedeutung sind diese Systeme bei Lastkraftwagen mit einem Anhänger oder Auflieger, um bspw. bei einer Talfahrt nachteilige Auswirkungen z.B. auf das Lenkverhalten der Zugmaschine durch ein Schieben des Anhängers oder Aufliegers zu verhindern. Auch ist bei Omnibussen die Kenntnis der aktuellen Fahrzeuggesamtmasse zur Optimierung des Antriebs, Federungs- und Bremssystems von großer Bedeutung, da sich die Fahrzeugmasse bei jeder Haltestelle des Busses erheblich ändern kann. Gelenkbusse mit Heckantrieb benötigen Daten über die Fahrzeugmasse zur Steuerung und/oder Regelung von Dämpfungsgliedern im Gelenkbereich, um ein Ausbrechen des Fahrzeughecks zu verhindern.

Bei einer aus DE-OS 42 28 413 A1 bekannten Vorrichtung wird die Fahrzeugmasse dadurch bestimmt, daß wenigstens zwei Längsbeschleunigungen zu wenigstens zwei unterschiedlichen Zeitpunkten erfaßt werden und die zu diesen Zeitpunkten vorliegenden Vortriebskräfte erfaßt werden. Aus der Differenz der Vortriebskräfte und der Differenz der Längsbeschleunigungen wird dann die Fahrzeugmasse bestimmt. Für die Genauigkeit dieses bekannten Verfahrens ist es erforderlich, daß eine nennenswerte Differenz zwischen den zwei nacheinander gemessenen Beschleunigungswerten vorhanden ist, zusätzlich dürfen sich die Fahrwiderstände, wie z.B. Luftwiderstand, Rollwiderstand, Hangabtrieb, zwischen den aufeinanderfolgenden Zeitpunkten nicht wesentlich geändert haben. Zur Steigerung der Genauigkeit dieses Verfahrens wird vorgeschlagen, die Bestimmung der Fahrzeugmasse bei jedem größeren Beschleunigungssprung zu wiederholen.

Aus der DE 38 43 818 C1 ist eine Vorrichtung zur Bestimmung eines mittleren Wertes der Fahrzeugmasse eines Kraftfahrzeuges bekannt. Die Ermittlung eines relativ genauen Wertes für die Fahrzeugmasse erfolgt dort durch Bestimmung des Fahrwiderstandes des Fahrzeuges bei geöffneter Kupplung im Antriebstrang sowie wiederholter Bestimmung (mit Mittelwertbildung) des Momentes des Motors und gleichzeitiger wiederholter Messung (mit Mittelwertbildung) der Beschleunigung des Fahrzeuges bei geschlossener Kupplung sowie Berücksichtigung der Übersetzung des Getriebes. Um mit dieser Vorrichtung die Fahrzeugmasse bestimmen zu können ist demnach ein Schaltvorgang erforderlich. Bei lang anhaltenden Fahrten ohne Schaltvorgang kann daher die Fahrzeugmasse nicht aktualisiert werden.

Aus der EP 0 111 636 A2 ist ebenfalls eine Einrichtung zur Ermittlung des Gewichtes eines Fahrzeuges bekannt. Dort erfolgt die Massenermittlung anhand der Erkenntnis, daß sich das Antriebsmoment eines Fahrzeugmotors aus dem Fahrzeuggewicht multipliziert mit der Fahrzeugbeschleunigung zuzüglich der der Vorwärtsbewegung des Fahrzeuges entgegenwirkenden Widerstandsmomente ergibt. Wenn Widerstandsmomente, Fahrzeugbeschleunigung und Antriebsmoment bei unterschiedlichen Zeitpunkten gemessen werden, können zwei Gleichungen aufgestellt werden, die sich nach dem Fahrzeuggewicht auflösen lassen. Um anhand dieser Gleichung einen brauchbaren Wert für das Fahrzeuggewicht berechnen zu können, muß eine ausreichende Differenz der Antriebsmomente gemessen werden. Für die bekannte Vorrichtung wird daher vorgeschlagen, den einen Meßzeitpunkt in einem antriebslosen Zustand des Fahrzeuges zu wählen. Ein solcher antriebsloser Zustand liegt dann vor, wenn der Antriebsstrang vom Motor entkoppelt ist, d.h. wenn ein Schaltvorgang vorliegt.

Eine weitere Vorrichtung zur Ermittlung einer Fahrzeugmasse ist aus der WO 93/18 375 A1 bekannt. Auch dort werden zwei Betriebszustände des Fahrzeuges miteinander verglichen. Dabei wird während jedem dieser Betriebszustände eine Reihe aufeinanderfolgender Kraftstöße ermittelt. Durch Integration dieser Kraftstöße wird ein Durchschnittswert für die im jeweiligen Betriebszustand erfolgte Impulsänderung ermittelt. Aus den Impulsänderungen von zwei Betriebszuständen wird dann die Fahrzeugmasse ermittelt, dabei wird jedoch vorausgesetzt, daß sich das Fahrzeug auf einer horizontalen Fahrbahn bewegt. Diese Berechnungsmethode eignet sich somit insbesondere für Schiffe.

Aus der US 5,610,372 ist ein Verfahren zur Bestimmung der Masse eines Fahrzeuges aus ermittelten Werten für die Vortriebskraft und die Längsbeschleunigung des Fahrzeuges bekannt. Bei diesem Verfahren wird sowohl für die Vortriebskraft als auch für die Längsbeschleunigung die Differenz der jeweiligen Werte gebildet, die für zwei aufeinander folgende Zeitschritte ermittelt worden sind. Diese Differenzen werden dazu verwendet, um in einem iterativen Verfahren einen Vektor zu bestimmen, dessen Steigung ein Maß für die Masse des Fahrzeuges ist. Hierbei handelt es sich nicht um ein lineares Regressionsverfahren, dem eine statistische Auswertung von Zeitreihen, die mehr als zwei Elemente enthalten zu Grunde liegt. Es handelt sich um ein iteratives vektorielles Verfahren, welches mit der Auswertung von jeweils zwei Werten für die Vortriebskraft und die Längsbeschleunigung auskommt und auch keine Akzeptanzprüfung für den für die Fahrzeugmasse ermittelten Wert vorsieht.

Aus der EP 0 142 633 A1 ist eine Einrichtung zur Ermittlung der Fahrbahnsteigung bekannt. Für die Ermittlung der Fahrbahnsteigung wird auch das Gewicht des Fahrzeuges benötigt. Das Gewicht des Fahrzeuges wird als Quotient einer Momentendifferenz und einer Beschleunigungsdifferenz gebildet. Wobei in die Differenzbildung zum einen ein Wertepaar für das Moment und die Beschleunigung eingeht, welches zu einem Zeitpunkt vorliegt, bei dem das Fahrzeug einem Antrieb durch den Motor unterliegt, und zum anderen ein entsprechendes Wertepaar eingeht, welches zu einem Zeitpunkt vorliegt, bei dem das Fahrzeug nicht dem Antrieb des Motors unterliegt. Es handelt sich hierbei nicht um eine Ermittlung des Fahrzeuggewichtes mittels eines linearen Regressionsverfahrens.

Die vorliegende Erfindung beschäftigt sich mit dem Problem, die aus dem Stand der Technik bekannten Verfahren und Vorrichtungen zur Bestimmung der Masse eines Kraftfahrzeugs dergestalt zu verbessern, daß während der Fahrt in einfacher Weise möglichst genaue Werte für die Fahrzeugmasse und die Fahrbahnneigung zur Verfügung gestellt werden können.

Dieses Problem wird erfindungsgemäß mit einem Verfahren mit den Merkmalen des Anspruches 1 und einer zugehörigen Vorrichtung mit den Merkmalen des Anspruchs 12 gelöst.

Bei dem erfindungsgemäßen Verfahren werden mit Hilfe einer Sensorik in aufeinanderfolgenden Zeitpunkten mit einer Vortriebskraft und mit einer zugehörigen Fahrzeuglängsbeschleunigung korrelierende Signale erfaßt, wobei die Signale für die Vortriebskraft und für die zugehörige Fahrzeuglängsbeschleunigung in kontinuierlich, mit konstanten Zeitabständen aufeinanderfolgenden Zeitpunkten erfaßt, werden.

Die zu den aufeinanderfolgenden Zeitpunkten erfaßten Signale werden von einem Rechner zur Erzeugung eines mit der Fahrzeugmasse korrelierenden Signals herangezogen.

Erfindungsgemäß werden die kontinuierlich erfaßten Signale nacheinander in einem Speicher gespeichert, wo sie eine Zeitreihe für die aufeinanderfolgenden Vortriebskräfte und eine Zeitreihe für die zugehörigen Fahrzeuglängsbeschleunigungen ausbilden.

Eine bestimmte Anzahl von mehr als zwei aufeinanderfolgenden, gespeicherten Signalen der Zeitreihen wird aus dem Speicher gelesen und vom Rechner zur Generierung des mit der momentanen Fahrzeugmasse korrelierenden Signals herangezogen, wobei der Rechner die in den Speicher eingelesenen Signale unter Verwendung eines linearen Regressions verfahrens verarbeitet. Vor einer Auswertung wird das für die Fahrzeugmasse erzeugte Signal einer Akzeptanzprüfung unterzogen.

Als Akzeptanzprüfung wird eine Streuung von Abszissenwerten herangezogen, die einen gemäß der Gleichung

$$\sigma_b{}^2 = S_{bb}/N - (S_b/N)^2$$

berechneten Wert repräsentiert, wobei die Akzeptanz des erzeugten Signals ($m_{Fzg}$) für die Fahrzeugmasse mit der Streuung der Abszissenwerte zunimmt, und/oder

als Akzeptanzprüfung wird ein Korrelationsköeffizient (R) überwacht, der einen gemäß der Gleichung

$$R^2 = \frac{(S_{bz} - S_b * S_z / N)^2}{(S_{bb} - S_b \cdot S_b / N) * (S_{zz} - S_z \cdot S_z / N)}$$

berechneten Wert repräsentiert, wobei mit zunehmendem Korrelationskoeffizienten (R) auch die Akzeptanz des erzeugten Signals ($m_{Fzg}$) für die Fahrzeugmasse steigt.

Dabei werden die in den Gleichungen enthaltenen Summenterme $S_b$, $S_z$, $S_{bb}$, $S_{bz}$ und $S_{zz}$ wie folgt berechnet:

$$S_b = \sum_{i=1}^{N} b_{Fzgi} \; ,$$

$$S_z = \sum_{i=1}^{N} Z_{TRLi} \; ,$$

$$S_{bb} = \sum_{i=1}^{N} b_{Fzgi} * b_{Fzgi} \quad ,$$

$$S_{bz} = \sum_{i=1}^{N} b_{Fzgi} * Z_{TRLi} \qquad \text{und} \qquad S_{zz} = \sum_{i=1}^{N} Z_{TRLi} * Z_{TRLi} \quad ,$$

wobei

$Z_{TRLi}$ ein Wert aus der Zeitreihe der Vortriebskräfte und
$b_{Fzgi}$ ein Wert aus der Zeitreihe der Fahrzeuglängsbeschleunigungen ist.

Bevor das mit der Fahrzeugmasse korrelierende Signal in einem anderen Fahrzeugsystem z.B. der Bremsanlage ausgewertet oder verwertet wird, wird es erfindungsgemäß mit Hilfe einer Akzeptanzprüfung auf seine Vertrauenswürdigkeit und Plausibilität untersucht.

Bei der Auswertung der Streuung der Abszissenwerte verhält es sich wie folgt:

Je größer die auf diese Weise berechnete Streuung der Abszissenwerte $\sigma_b$ ist, umso vertrauenswürdiger ist das der Fahrzeugmasse entsprechende Signal $m_{Fzg}$. Als Ausschlußkriterium für das jeweils untersuchte Signal $m_{Fzg}$ kann ein vorbestimmter Grenzwert vorgesehen werden, der von der Abszissenwertstreuung überschritten werden muß, damit eine Auswertung des betreffenden Signals für die Fahrzeugmasse $m_{Fzg}$ zugelassen wird.

Erfindungsgemäß kann Zusätzlich oder alternativ dazu der Korrelationskoeffizient R bei der Plausibilitätsprüfung herangezogen werden.

Auch für den Korrelationskoeffizienten R kann vorgesehen werden, daß eine Auswertung des untersuchten, der Fahrzeugmasse entsprechenden Signals $m_{Fzg}$ nur dann durchgeführt werden darf, wenn R einen bestimmten Grenzwert übersteigt. Dieser Grenzwert kann insbesondere dynamisch aus den vorhergehenden Berechnungen der mit der Fahrzeugmasse korrelierenden Signale $m_{Fzg}$ berechnet werden. Bspw. verschlechtern Schwingungen im Antriebsstrang den errechneten Korrelationskoeffizienten R. Für den Fall, daß diese Schwingungen im Antriebsstrang im Vergleich zu dem fahrdynamischen Anteil der Signale für die Vortriebskräfte $Z_{TRLi}$ und die zugehörigen Fahrzeuglängsbeschleunigungen $b_{Fzgi}$ zu groß sind, sorgt dieses Akzeptanzkriterium, d.h. der Grenzwert für den Korrelationskoeffizienten R, dafür, daß das davon betroffene Signal für die Fahrzeugmasse $m_{Fzg}$ unberücksichtigt bleibt bzw. nicht verwertet wird.

Darüber hinaus kann bei Kenntnis der aktuellen Fahrzeugmasse mit den aktuellen werten für die Vortriebskraft und für die Fahrzeuglängsbeschleunigung ein Signal für die momentane Fahrbahnsteigung erzeugt werden.

Die vorliegende Erfindung beruht auf der Erkenntnis, daß zur Bestimmung der Fahrzeugmasse und der Fahrbahnsteigung lediglich die am Fahrzeug wirkende Vortriebskraft $Z_{TRL}$, die zugehörige Fahrzeuglängsbeschleunigung $b_{Fzg}$ und die zugehörige Hangabtriebskraft $Z_{HA}$ benötigt werden. Die Ausgangssituation bildet der allgemein bekannte Zusammenhang:

$$Z_{TRLi} = m_{Fzg} * b_{Fzgi} + Z_{HA}.$$

Dabei wird die Vortriebskraft $Z_{TRL}$ aus der am Fahrzeug wirkenden Antriebs- oder Bremskraft $Z_T$ abzüglich der Rollwiderstandskraft $Z_R$ und abzüglich der Luftwiderstandskraft $Z_L$ gebildet:

$$Z_{TRL} = Z_T - Z_R - Z_L.$$

Die Vortriebskraft $Z_{TRL}$ des Fahrzeuges kann bspw. aus dem Motordrehmoment, der Getriebeübersetzung, der Achsübersetzung und aus dem Radradius bestimmt werden, wenn bspw. das Motordrehmoment in Form von gemessenen Kennfeldern in Abhängigkeit von bestimmten Motorparametern wie Pedalstellung, Drehzahl etc. gespeichert ist. Das Motordrehmoment steht bei einer Vielzahl heute üblicher Motorsteuerungen in den Fahrzeugen bereits zur Verfügung. Die Fahrzeuglängsbeschleunigung läßt sich bspw. über die Raddrehzahl in Verbindung mit dem Radradius berechnen, indem ein in einer Zeiteinheit zurückgelegter Weg zweimal nach der Zeit abgeleitet wird. Die dazu notwendigen Werte liefern bspw. ein Anti-Blockier- und/oder ein Antriebsschlupfregelsystem und stehen somit ebenfalls bei vielen heutigen Fahrzeugen zur Verfügung.

Die mit dem Laufindex i versehenen Terme sind die nacheinander erfaßten, in den Zeitreihen abgelegten Werte. Wenn der Zeitabstand $\Delta t$ zwischen den aufeinanderfolgenden Zeitpunkten $t_i$, in denen diese Werte für die Zeitreihen erfaßt werden, ausreichend klein ist, kann die Fahrzeugmasse $m_{Fzg}$ und die Hangabtriebskraft $Z_{HA}$ in diesem Zeitabschnitt $\Delta t$ als konstant angesehen werden.

Entsprechend Anspruch 2 kann unter Zuhilfenahme von einer Anzahl N aufeinanderfolgender Werte der Zeitreihen mit Hilfe eines Regressionsrechenverfahrens gemäß der Gleichung:

$$m_{Fzg} = \frac{S_{bz} - S_z * S_b / N}{S_{bb} - S_b * S_b / N}$$

ein mit der Fahrzeugmasse korreliertes Signal $m_{Fzg}$ erzeugt werden.

Ist die Fahrzeugmasse $m_{Fzg}$ bekannt, kann die Steigung s oder Neigung der Fahrbahn in Längsrichtung bestimmt werden. Dabei ist von folgendem Zusammenhang auszugehen:

$$Z_{HAi} = Z_{TRLi} - m_{Fzg} * b_{Fzgi} = m_{Fzg} * g * \sin(s_i)$$

wobei g die Erdbeschleunigung ist. Im Zeitpunkt $t_i$ liegt dann die momentane Fahrbahnsteigung $s_i$ vor.

Bei einer bevorzugten Ausführungsform können die aufeinanderfolgend erzeugten Signale $s_i$ für die Fahrbahnsteigung mit Hilfe eines Tiefpaßfilterverfahrens geglättet werden, wodurch sich störende Streuungen eliminieren lassen.

Für die Verwertbarkeit der erzeugten Signale $m_{Fzg}$ für die Fahrzeugmasse und somit auch der Signale $s_i$ für die Fahrbahnsteigung ist die Genauigkeit der zur Verfügung stehenden Signale $Z_{TRLi}$ für die Vortriebskraft und die Signale $b_{Fzgi}$ für die zugehörige Fahrzeuglängsbeschleunigung sowie das verwendete Regressionsrechnungsverfahren von großer Bedeutung.

Entsprechend einer vorteilhaften Ausführungsform der erfindungsgemäßen Vorrichtung werden die für die Erzeugung des mit der Fahrzeugmasse korrelierenden Signals $m_{Fzg}$ benötigten Summenterme $S_b$, $S_z$, $S_{bb}$, $S_{bz}$, $S_{zz}$ mit Hilfe eines Ringspeicherverfahrens bestimmt. Dieses Verfahren zeichnet sich durch einen minimalen Rechen- und Speicherbedarf aus. Beim Ringspeicherverfahren werden in jedem Zeitpunkt $t_i$ die aktuellen Summen dadurch gebildet, daß das jeweils älteste Element der jeweiligen Zeitreihe von der vorhergehenden Summe subtrahiert wird - wobei sich eine Zwischensumme ergibt - und das jeweils neueste bzw. jüngste Element dieser Zeitreihe zu dieser Zwischensumme addiert wird - wobei sich die aktuelle Summe ergibt. Der jeweils älteste Wert wird dabei vom jeweils neu hinzugekommenen jüngsten Wert im Speicher überschrieben.

Mit Hilfe des vorgeschlagenen Regressionsrecheriverfahrens wird ständig die jeweils aktuell gültige Fahrzeugmasse $m_{Fzg}$ bzw. ein damit korreliertes Signal zur Verfügung gestellt. Die aktuelle Fahrbahnsteigung $s_i$ bzw. das damit korrelierende Signal wird mit Hilfe des Wertes $m_{Fzg}$ für die aktuell gültigen Fahrzeugmasse und einem aktuellen Wert $Z_{HAi}$ für die Hangabtriebskraft bestimmt und zusätzlich einem Tiefpaßfilterverfahren unterworfen.

Werden sowohl der Korrelationskoeffizient R als auch die Streuung der Abszissenwerte $\sigma_b$ als Akzeptanzkriterien verwendet, wird aus diesen beiden Größen vorzugsweise ein Gewichtungsfaktor ermittelt, der bei einem gewichteten Mittelwert der erzeugten einzelnen Signale für die Fahrzeugmasse $m_{Fzg}$ die Vertrauenswürdigkeit oder Güte der Einzelresultate berücksichtigt. Erst dieser gewichtete Mittelwert wird als verwertbares oder auswertbares Signal für die Fahrzeugmasse $m_{Fzg}$ den jeweils mit der erfindungsgemäßen Vorrichtung kommunizierenden dynamischen Fahrzeugsystemen zur Verfügung gestellt.

Für eine zuverlässige Bestimmung der Vortriebskraft $Z_{TRL}$ aus den Einzelkräften Antriebs- oder Bremskraft $Z_T$, Rollwiderstandkraft $Z_R$ und Luftwiderstandkraft $Z_L$ müssen unterschiedliche Verluste und systemimmanente Effekte berücksichtigt werden. Ist bspw. die durch die Fahrzeugbremse verursachte Bremskraft $Z_T$ nicht eindeutig ermittelbar, kann vorzugsweise die Regressionsrechnung für die Fahrzeugmasse solange ausgesetzt werden, bis die Betätigung der Bremsen beendet ist. Desweiteren ist zu berücksichtigen, daß sich die reale Fahrzeugmasse von der zu berücksichtigenden, wirksamen, effektiven Fahrzeugmasse unterscheidet, da bestimmte Teilmassen des Fahrzeugs, die in Abhängigkeit von der Fahrzeuggeschwindigkeit rotieren, in der Längsrichtung des Fahrzeugs eine größere Trägheit aufweisen. Dadurch ist die effektive Fahrzeugmasse größer als die reale Fahrzeugmasse. In gleicher Weise ergibt sich unter Berücksichtigung der Trägheitswirkung des Motors eine effektive Vortriebskraft für das Fahrzeug, die sich von der vom Motor aufgebrachten Antriebskraft unterscheidet. Darüber hinaus müssen Übertragungsverluste berücksichtigt werden, die zwischen den verschiedenen Aggregaten im Antriebsstrang (Differential, Getriebe und dgl.) auftreten, wodurch sich die effektive Vortriebskraft im Zugbetrieb des Motors verringert und im Schubbetrieb des Motors erhöht. Bei der Berücksichtigung der Roll- und Luftwiderstandskräfte $Z_R$ und $Z_L$ können empirisch ermittelte Funktionen herangezogen werden. Für den Fall, daß die Roll- und Luftwiderstandskräfte $Z_R$ und $Z_L$ nicht berücksichtigt oder gleich Null gesetzt werden, wird bei der Bestimmung der Fahrbahnneigung ein Signal $s_i$ für die Steigung erzeugt, das einem effektiven Fahrwiderstand entspricht. Die dabei entstehende Abweichung der Fahrbahnneigung, die dem erzeugten Signal $s_i$ entspricht, von der real vorliegenden Steigung beträgt in der Regel weniger als 1%.

Die Anzahl N der Werte in den Zeitreihen, die zur Ermittlung eines mit der Fahrzeugmasse $m_{Fzg}$ korrespondierenden Signals und in der Folge eines mit der Fahrbahnsteigung $s_i$ korrespondierenden Signals ist für das vorgeschlagene Regressionsrechenverfahren entsprechend einer bevorzugten Ausführungsform so zu wählen, daß sich unter Berücksichtigung des konstanten Zeitabstandes $\Delta t$ zwischen zwei aufeinanderfolgenden Werten der Zeitreihen insgesamt eine Zeitspanne ergibt, die größer ist als eine Schwingungsperiode derjenigen im Antriebsstrang auftretenden Schwingung, die die niedrigste Frequenz aufweist. Auf diese Weise können durch Schwingungen im Antriebsstrang verursachte Schwankungen der Anstriebskraft $Z_T$ und der Fahrzeugbeschleunigung $b_{Fzg}$ gegeneinander aufgehoben werden, so daß sie das Ergebnis für die Fahrzeugmasse $m_{Fzg}$ und die Fahrbahnsteigung s nicht verfälschen.

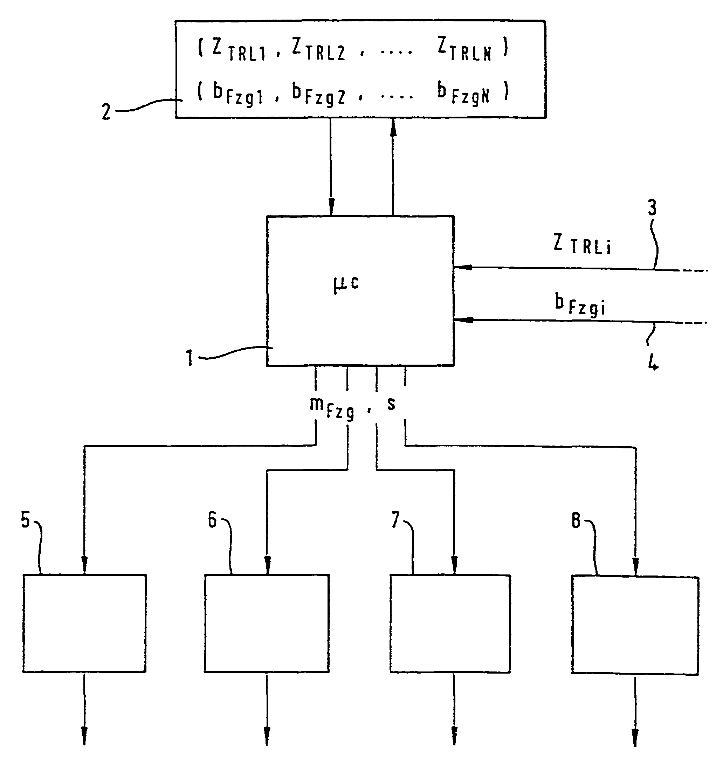

Im folgenden wird anhand der Zeichnung ein Ausführungsbeispiel der erfindungsgemäßen Vorrichtung bzw. des erfindungsgemäßen Verfahrens beschrieben:

Die erfindungsgemäße Vorrichtung besteht im wesentlichen aus einem Rechner 1 und aus einem Speicher 2. Die Vorrichtung verfügt außerdem über eine im übrigen nicht dargestellte Sensorik, die zur Vortriebskraft korrelierende Signale $Z_{TRL}$ über eine Datenleitung 3 und zur Fahrzeuglängsbeschleunigung korrelierende Signale $b_{Fzg}$ über eine weitere Datenleitung 4 dem Rechner 1 zuführt. Die Sensorik kann dabei auch aus einer bereits am Fahrzeug vorhandenen Sensorik bestehen, die andere dynamische Fahrzeugteilsysteme (z.B. eine Getriebesteuerung, ein ABS-System) mit den entsprechenden Signalen versorgt. Die Datenübertragung zum Rechner 1 der erfindungsgemäßen Vorrichtung kann dann insbesondere über eine Schnittstelle an den jeweiligen anderen Fahrzeugsystemen erfolgen.

Die dem Rechner 1 zugeführten Signalwerte werden im Speicher 2 in einer ersten Zeitreihe ($Z_{TRL1}$, $Z_{TRL2}$, ..., $Z_{TRLN}$) für die Vortriebskräfte $Z_{TRL}$ und in einer zweiten Zeitreihe ($b_{Fzg1}$, $b_{Fzg2}$, ..., $b_{FzgN}$) für die Fahrzeuglängsbeschleunigungen $b_{Fzg}$ abgelegt bzw. gespeichert. Darüber hinaus können im Speicher 2 weitere Daten abrufbereit abgelegt sein, bspw. die Daten einer Motorkennlinie, wenn z.B. anstelle der Vortriebskraft $Z_{TRL}$ nur ein Antriebsmoment über die Datenleitung 3 dem Rechner 1 zur Verfügung gestellt werden kann.

Die Daten bzw. Messwerte, für die der Vortriebskraft und der Fahrzeuglängsbeschleunigung entsprechenden Signale $Z_{TRL}$ und $b_{Fzg}$ werden fortlaufend mit einem konstanten Zeitabstand $\Delta t$ erfaßt und dem Rechner 1 zugeführt bzw. vom Rechner 1 an den entsprechenden Sensoren der Sensorik abgefragt.

Mit Hilfe des oben beschriebenen Regressionsrechenverfahrens wird vom Rechner 1 aus einer Anzahl N von Werten aus der Zeitreihe für die Vortriebskraft $Z_{TRL}$ und den zugehörigen Werten der Zeitreihe für die Fahrzeuglängsbeschleunigung $b_{Fzg}$ ein mit der aktuellen Fahrzeugmasse korrelierendes Signal $m_{Fzg}$ erzeugt. Der ermittelte Wert für die Fahrzeugmasse $m_{Fzg}$ wird dann vorzugsweise mittels verschiedener Akzeptanzkriterien auf seine Plausibilität überprüft, wobei die entsprechenden Grenzwerte und Vergleichswerte jeweils im Speicher 2 abgespeichert sein können. Nach einer erfolgreichen Überprüfung des ermittelten Wertes wird ein zu der aktuellen Fahrbahnsteigung korrelierendes Signal s vom Rechner 1 erzeugt.

Die erfindungsgemäße Vorrichtung kann vorzugsweise über entsprechende Schnittstellen mit anderen dynamischen Fahrzeugteilsystemen verbunden sein, denen auf diese Weise die Signale für den jeweils aktuellen Wert der Fahrzeugmasse $m_{Fzg}$ und der Fahrbahnsteigung s zur Verfügung gestellt werden. Im Ausführungsbeispiel sind an die Vorrichtung bzw. an den Rechner 1 ein Federungssystem 5, ein Steuersystem 6 für ein Automatikgetriebe, ein Anti-Blockier-System 7 und ein Antriebsschlupfregelsystem 8 angeschlossen, die dadurch immer die aktuellen Werte der Fahrzeugmasse und/oder der Fahrbahnsteigung bei ihrer Regelungs- und/oder Steuerungsfunktion berücksichtigen können.

**Patentansprüche**

1. Verfahren zur Bestimmung der Masse eines durch Vortriebskräfte in seine Längsrichtung bewegten Kraftfahrzeuges mit folgenden Merkmalen:

   - mit Hilfe einer Sensorik werden in aufeinanderfolgenden Zeitpunkten mit einer Vortriebskraft und mit einer zugehörigen Fahrzeuglängsbeschleunigung korrelierende Signale erfaßt, wobei die Signale ($Z_{TRL}$, $b_{Fzg}$) für die Vortriebskraft und für die zugehörige Fahrzeuglängsbeschleunigung in kontinuierlich, mit konstanten Zeitabständen ($\Delta t$) aufeinanderfolgenden Zeitpunkten ($t_i$) erfaßt werden
   - die zu den aufeinanderfolgenden Zeitpunkten erfaßten Signale werden von einem Rechner zur Erzeugung eines mit der Fahrzeugmasse korrelierenden Signals herangezogen, **dadurch gekennzeichnet,**

**daß** die kontinuierlich erfaßten Signale ($Z_{TRL}$, $b_{Fzg}$) nacheinander in einem Speicher (2) gespeichert werden, wo sie eine Zeitreihe für die aufeinanderfolgenden Vortriebskräfte und eine Zeitreihe für die zugehörigen Fahrzeuglängsbeschleunigungen ausbilden, wobei

eine bestimmte Anzahl (N) von mehr als zwei aufeinanderfolgenden, gespeicherten Signalen ($Z_{TRLi}$, $b_{Fzgi}$) der Zeitreihen aus dem Speicher (2) gelesen und vom Rechner (1) zur Generierung des mit der momentanen Fahrzeugmasse korrelierenden Signals ($m_{Fzg}$) herangezogen wird, wobei der Rechner (1) die in den Speicher (2) eingelesenen Signale ($Z_{TRLi}$, $b_{Fzgi}$) unter Verwendung eines linearen Regressionsrechenverfahrens verarbeitet, und wobei

vor einer Auswertung des für die Fahrzeugmasse erzeugten Signals ($m_{Fzg}$) dieses einer Akzeptanzprüfung unterzogen wird,

wobei als Akzeptanzprüfung eine Streuung von Abszissenwerten ($\sigma_b$) herangezogen wird, die einen gemäß der Gleichung

$$\sigma_b{}^2 = S_{bb}/N - (S_b/N)^2$$

berechneten Wert repräsentiert, wobei die Akzeptanz des erzeugten Signals ($m_{Fzg}$) für die Fahrzeugmasse mit der Streuung der Abszissenwerte zunimmt, und/oder wobei

als Akzeptanzprüfung ein Korrelationskoeffizient (R) überwacht wird, der einen gemäß der Gleichung

$$R^2 = \frac{(S_{bz} - S_b * S_z / N)^2}{(S_{bb} - S_b \cdot S_b / N) * (S_{zz} - S_z \cdot S_z / N)}$$

berechneten Wert repräsentiert, wobei mit zunehmendem Korrelationskoeffizienten (R) auch die Akzeptanz des erzeugten Signals ($m_{Fzg}$) für die Fahrzeugmasse steigt,

wobei die in den Gleichungen enthaltenen Summenterme $S_b$, $S_z$, $S_{bb}$, $S_{bz}$ und $S_{zz}$ wie folgt berechnet werden:

$$S_b = \sum_{i=1}^{N} b_{Fzgi} \, ,$$

$$S_z = \sum_{i=1}^{N} Z_{TRLi} \, ,$$

$$S_{bb} = \sum_{i=1}^{N} b_{Fzgi} * b_{Fzgi} \, ,$$

$$S_{bz} = \sum_{i=1}^{N} b_{Fzgi} * Z_{TRLi} \quad \text{und} \quad S_{zz} = \sum_{i=1}^{N} Z_{TRLi} * Z_{TRLi} \, ,$$

wobei

$Z_{TRLi}$ ein Wert aus der Zeitreihe der Vortriebskräfte und
$b_{Fzgi}$ ein Wert aus der Zeitreihe der Fahrzeuglängsbeschleunigungen ist.

2. Verfahren nach Anspruch 1,
**dadurch gekennzeichnet,**
**daß** das Signal ($m_{Fzg}$) für die Fahrzeugmasse einen gemäß der Gleichung

$$m_{Fzg} = \frac{S_{bz} - S_z {}^* S_b / N}{S_{bb} - S_b {}^* S_b / N}$$

berechneten Wert repräsentiert.

**3.** Verfahren nach Anspruch 1,
**dadurch gekennzeichnet,**
**daß** zur Generierung der Summenterme ($S_b$, $S_z$, $S_{bb}$ und $S_{bz}$) ein Ringspeichersystem verwendet wird, bei dem die aktuellen Summen um den ältesten Summanden aus der jeweiligen Zeitreihe verringert und um den jüngsten Summanden aus der jeweiligen Zeitreihe erhöht werden.

**4.** Verfahren nach einem der Ansprüche 1 bis 3,
**dadurch gekennzeichnet,**
**daß** das Signal ($Z_{TRL}$) mit einer Vortriebskraft korreliert, die aus der am Fahrzeug wirkenden Zug- oder Bremskraft ($Z_T$) abzüglich der Rollwiderstandskraft ($Z_R$) und abzüglich der Luftwiderstandskraft ($Z_L$) gebildet ist.

**5.** Verfahren nach einem der Ansprüche 1 bis 4,
**dadurch gekennzeichnet,**
**daß** die Anzahl (N) der für die Bestimmung des Signals ($m_{Fzg}$) für die Fahrzeugmasse verwendeten Werte der Zeitreihen so gewählt ist, daß das Produkt aus dieser Anzahl (N) und dem Zeitabstand ($\Delta t$) von zwei aufeinander-folgenden Zeitpunkten ($t_i$) eine Zeitspanne ergibt, die größer ist als die Schwingungsperiode der Schwingung, die in einem Antriebsstrang des Kraftfahrzeuges die niedrigste Frequenz aufweist.

**6.** Verfahren nach Anspruch 1,
**dadurch gekennzeichnet,**
**daß** ein Grenzwert für die Streuung der Abszissenwerte ($\sigma_b$) im Speicher (2) abgelegt ist, unterhalb dessen eine Auswertung des erzeugten, mit der Fahrzeugmasse korrelierenden Signals ($m_{Fzg}$) nicht erfolgt.

**7.** Verfahren nach Anspruch 1,
**dadurch gekennzeichnet,**
**daß** ein Grenzwert für den Korrelationskoeffizienten (R) fortlaufend aus vorhergehenden, akzeptierten Signalen ($m_{Fzg}$) für die Fahrzeugmasse berechnet und im Speicher (2) abgelegt wird, unterhalb dessen eine Auswertung des aktuell erzeugten Signals ($m_{Fzg}$) für die Fahrzeugmasse nicht erfolgt.

**8.** Verfahren nach einem der vorhergehenden Ansprüche,
**dadurch gekennzeichnet,**
**daß** das erzeugte, mit der Fahrzeugmasse korrelierende Signal ($m_{Fzg}$) zur Erzeugung eines mit der Fahrbahnsteigung korrelierenden Signals (s) herangezogen wird.

**9.** Verfahren nach Anspruch 8,
**dadurch gekennzeichnet,**
**daß** das Signal (s) für die Fahrbahnsteigung einen gemäß dem Gleichungssystem

$$Z_{HAi} = Z_{TRLi} - m_{Fzg} {}^* b_{Fzgi} = m_{Fzg} {}^* g {}^* \sin(s_i)$$

berechneten Wert repräsentiert, wobei

$Z_{HAi}$ =     Hangabtriebskraft
$g$ =     Erdbeschleunigung.

**10.** Verfahren nach Anspruch 8 oder 9,
**dadurch gekennzeichnet,**
**daß** aufeinanderfolgende Signale ($s_i$) für die Fahrbahnsteigung durch ein Tiefpaßfilterverfahren geglättet werden.

**11.** Verfahren nach Anspruch 1,
**dadurch gekennzeichnet,**

**daß** aus dem Korrelations koeffizienten (R) und aus der Streuung der Abszissenwerte ($\sigma_b$) ein Gewichtungsfaktor ermiltelt wird, der bei einem gewichteten Mittelwert der erzeugten einzelnen Signale für die Fahrzeugmasse ($m_{Fzg}$) die Güte der Einzelresultate Berücksichtigt.

**12.** Vorrichtung zur Bestimmung der Masse eines durch Vortriebskräfte in seine Längsrichtung bewegten Kraftfahrzeuges wobei die Vorrichtung über eine Sensorik verfügt, mit deren Hilfe in aufeinanderfolgenden Zeitpunkten mit einer Vortriebskraft und mit einer zugehörigen Fahrzeuglängsbeschleunigung korrelierende Signale erfaßt werden, wobei , die Signale ($Z_{TRL}$, $b_{Fzg}$) für die Vortriebskraft und für die zugehörige Fahrzeuglängsbeschleunigung in kontinuierlich, mit konstanten Zeitabständen ($\Delta t$) aufeinanderfolgenden Zeitpunkten ($t_i$) erfaßt werden, wobei die Vorrichtung einen Rechner (1) und einen Speicher (2) umfaßt, wobei der Rechner (1)
die zu den aufeinanderfolgenden Zeitpunkten erfaßten Signale zur Erzeugung eines mit der Fahrzeugmasse korrelierenden Signals heranzieht, **dadurch gekennzeichnet**
**daß** die kontinuierlich erfaßten Signale ($Z_{TRL}$, $b_{Fzg}$) nacheinander in dem Speicher (2) gespeichert werden, wo sie eine Zeitreihe für die aufeinanderfolgenden Vortriebskräfte und eine Zeitreihe für die zugehörigen Fahrzeuglängsbeschleunigungen ausbilden, wobei
eine bestimmte Anzahl (N) von mehr als zwei aufeinanderfolgenden, gespeicherten Signalen ($Z_{TRLi}$, $b_{Fzgi}$) der Zeitreihen aus dem Speicher (2) gelesen und vom Rechner (1) zur Generierung des mit der momentanen Fahrzeugmasse korrelierenden Signals ($m_{Fzg}$) herangezogen wird, wobei der Rechner (1) die in den Speicher (2) eingelesenen Signale ($Z_{TRLi}$, $b_{Fzgi}$) unter Verwendung eines linearen Regressionsrechenverfahrens verarbeitet, und wobei
vor einer Auswertung des für die Fahrzeugmasse erzeugten Signals ($m_{Fzg}$) dieses einer Akzeptanzprüfung unterzogen wird,
wobei als Akzeptanzprüfung eine Streuung von Abszissenwerten ($\sigma_b$) herangezogen wird, die einen gemäß der Gleichung

$$\sigma_b{}^2 = S_{bb}/N - (S_b/N)^2$$

berechneten Wert repräsentiert, wobei die Akzeptanz des erzeugten Signals ($m_{Fzg}$) für die Fahrzeugmasse mit der Streuung der Abszissenwerte zunimmt, und/oder wobei
als Akzeptanzprüfung ein Korrelationsköeffizient (R) überwacht wird, der einen gemäß der Gleichung

$$R^2 = \frac{(S_{bz} - S_b * S_z / N)^2}{(S_{bb} - S_b \cdot S_b / N)*(S_{zz} - S_z \cdot S_z / N)}$$

berechneten Wert repräsentiert, wobei mit zunehmendem Korrelationskoeffizienten (R) auch die Akzeptanz des erzeugten Signals ($m_{Fzg}$) für die Fahrzeugmasse steigt,
wobei die in den Gleichungen enthaltenen Summenterme $S_b$, $S_z$, $S_{bb}$, $S_{bz}$ und $S_{zz}$ wie folgt berechnet werden:

$$S_b = \sum_{i=1}^{N} b_{Fzgi}$$

$$S_z = \sum_{i=1}^{N} Z_{TRLi}$$

$$S_{bb} = \sum_{i=1}^{N} b_{Fzgi} * b_{Fzgi}$$

$$S_{bz} = \sum_{i=1}^{N} b_{Fzgi} * Z_{TRLi} \quad \text{und} \quad S_{zz} = \sum_{i=1}^{N} Z_{TRLi} * Z_{TRLi} \quad ,$$

wobei

$Z_{TRLi}$   ein Wert aus der Zeitreihe der Vortriebskräfte und
$b_{Fzgi}$   ein Wert aus der Zeitreihe der Fahrzeuglängsbeschleunigungen ist.

**Claims**

**1.** Method for determining the mass of a motor vehicle moved by propulsive forces in its longitudinal direction, comprising the following features:

- signals correlating with a propulsive force and an associated vehicle longitudinal acceleration are detected with the aid of a sensor system at consecutive instants, wherein the signals ($Z_{TRL}$, $b_{vehicle}$) for the propulsive force and for the associated vehicle longitudinal acceleration are detected at continuous instants ($t_i$) following one another at constant time intervals ($\Delta t$)
- the signals detected at the consecutive instants are used by a computer to generate a signal correlating with the vehicle mass, **characterised in that** the continuously detected signals ($Z_{TRL}$, $b_{vehicle}$) are stored one after the other in a memory (2), where they form a time sequence for the consecutive propulsive forces and a time sequence for the associated vehicle longitudinal accelerations, wherein a specific number (N) of more than two consecutive, stored signals ($Z_{TRLi}$, $b_{vehiclei}$) of the time sequences are read out from the memory (2) and used by the computer (1) to generate the signal ($m_{vehicle}$) correlating with the instantaneous vehicle mass,

wherein the computer (1) processes the signals ($Z_{TRLi}$, $b_{vehiclei}$) read into the memory (2) using a linear regression calculation method, and wherein, prior to an evaluation of the signal ($m_{vehicle}$) generated for the vehicle mass, the signal is subjected to an acceptance test, a spread of abscissa values ($\sigma_b$) being used as the acceptance test, the spread representing a value calculated according to the equation

$$\sigma_b{}^2 = S_{bb}/N - (S_b/N)^2$$

wherein the acceptance of the signal ($m_{vehicle}$) generated for the vehicle mass increases with the spread of the abscissa values, and/or wherein a coefficient (R) of correlation is monitored as the acceptance test, the coefficient of correlation representing a value calculated according to the equation

$$R^2 = \frac{(S_{bz} - S_b * S_z / N)^2}{(S_{bb} - S_b \cdot S_b / N) * (S_{zz} - S_z \cdot S_z / N)}$$

wherein with increasing coefficients (R) of correlation the acceptance of the generated signal ($m_{vehicle}$) for the vehicle mass also increases, the sum terms $S_b$, $S_z$, $S_{bb}$, $S_{bz}$ and $S_{zz}$ contained in the equations being calculated as follows:

$$S_b = \sum_{i=1}^{N} b_{vehiclei} \ ,$$

$$S_z = \sum_{i=1}^{N} Z_{TRLi} \ ,$$

$$S_{bb} = \sum_{i=1}^{N} b_{vehiclei} * b_{vehiclei} \, ,$$

$$S_{bz} = \sum_{i=1}^{N} b_{vehiclei} * Z_{TRLi} \qquad \text{and} \qquad S_{zz} = \sum_{i=1}^{N} Z_{TRLi} * Z_{TRLi} \, ,$$

wherein $Z_{TRLi}$ is a value from the time sequence of the propulsive forces and $b_{vehiclei}$ is a value from the time sequence of the vehicle longitudinal accelerations.

2. Method according to claim 1, **characterised in that** the signal ($m_{vehicle}$) for the vehicle mass represents a value calculated according to the equation

$$m_{vehicle} = \frac{S_{bz} - S_z * S_b/N}{S_{bb} - S_b * S_b/N}$$

3. Method according to claim 1, **characterised in that** to generate the sum terms ($S_b$, $S_z$, $S_{bb}$ and $S_{bz}$), a ring memory system is used, in which the actual sums are reduced by the earliest summands from the respective time sequence and increased by the most recent summands from the respective time sequence.

4. Method according to any one of claims 1 to 3, **characterised in that** the signal ($Z_{TRL}$) correlates with a propulsive force which is formed from the traction force or braking force ($Z_T$) acting on the vehicle less the rolling resistance ($Z_R$) and less the aerodynamic drag ($Z_L$).

5. Method according to any one of claims 1 to 4, **characterised in that** the number (N) of the values of the time sequences used to determine the signal ($m_{vehicle}$) for the vehicle mass is selected such that the product of the number (N) and the time interval ($\Delta t$) of two consecutive instants ($t_i$) produces a time span, which is greater than the oscillation period of the oscillation which the lowest frequency has in a drive train of the motor vehicle.

6. Method according to claim 1, **characterised in that** a limit value for the spread of the abscissa values ($\sigma_b$) is filed in the memory (2), below which limit value an evaluation of the signal ($m_{vehicle}$) generated correlating with the vehicle mass does not take place.

7. Method according to claim 1, **characterised in that** a limit value for the coefficients (R) of correlation are continuously calculated from previous, accepted signals ($m_{vehicle}$) for the vehicle mass and filed in the memory (2), below which limit value an evaluation of the signal ($m_{vehicle}$) currently generated for the vehicle mass does not take place,

8. Method according to any one of the preceding claims, **characterised in that** the signal ($m_{vehicle}$) generated correlating with the vehicle mass is used to generate a signal (s) correlating with the road gradient.

9. Method according to claim 8, **characterised in that** the signal (s) for the road gradient represents a value calculated according to the equation system

$$Z_{HAI} = Z_{TRU} - m_{vehicle} * b_{vehiclei} = m_{vehicle} * g * \sin(s_i),$$

wherein

$Z_{HAi}$ = descending force
$g$ = acceleration due to gravity

10. Method according to claim 8 or 9, **characterised in that** consecutive signals ($s_i$) are smoothed by a low-pass filtering method for the road gradient.

**11.** Method according to claim 1, **characterised in that** a weighting factor is determined from the coefficients (R) of correlation and from the spread of the abscissa values ($\sigma_b$), which weighting factor takes into account the quality of the individual results in a weighted mean value of the individual signals generated for the vehicle mass ($m_{vehicle}$).

**12.** Device for determining the mass of a motor vehicle moved by propulsive forces in its longitudinal direction, wherein the device has a sensor system, with the aid of which signals correlating with a propulsive force and with an associated vehicle longitudinal acceleration are detected at consecutive instants, wherein the signals ($Z_{TRL}$, $b_{vehicle}$) for the propulsive force and for the associated vehicle longitudinal acceleration are detected at continuous instants ($t_i$) following one another at constant time intervals ($\Delta t$), wherein the device comprises a computer (1) and a memory (2), wherein the computer (1) uses the signals detected at the consecutive instants to generate a signal which correlates with the vehicle mass, **characterised in that** the continuously detected signals ($Z_{TRL}$, $b_{vehicle}$) are stored consecutively in the memory (2), where they form a time sequence for the consecutive propulsive forces and a time sequence for the associated vehicle longitudinal accelerations, wherein a specific number (N) of more than two consecutive, stored signals ($Z_{TRU}$, $b_{vehiclei}$) of the time sequences are read out of the memory (2) and used by the computer (1) to generate the signal ($m_{vehicle}$) correlating with the instantaneous vehicle mass, wherein the computer (1) processes the signals ($Z_{TRLi}$, $b_{vehiclei}$) read into the memory (2) using a linear regression calculation method, and wherein, prior to an evaluation of the signal ($m_{vehicle}$) generated for the vehicle mass, the signal is subjected to an acceptance test, a spread of abscissa values ($\sigma_b$) being used as the acceptance test, the spread representing a value calculated according to the equation

$$\sigma_b{}^2 = S_{bb}/N - (S_b/N)^2$$

wherein the acceptance of the signal ($m_{vehicle}$) generated for the vehicle mass increases with the spread of the abscissa values, and/or wherein a coefficient (R) of correlation is monitored as the acceptance test and represents a value calculated according to the equation

$$R^2 = \frac{(S_{bz} - S_b * S_z / N)^2}{(S_{bb} - S_b \cdot S_b / N)*(S_{zz} - S_z \cdot S_z / N)}$$

wherein with increasing coefficients (R) of correlation, the acceptance of the signal ($m_{vehicle}$) generated for the vehicle mass also increases, the sum terms $S_b$, $S_z$, $S_{bb}$, $S_{bz}$ and $S_{zz}$ contained in the equations being calculated as follows:

$$S_b = \sum_{i=1}^{N} b_{vehiclei} ,$$

$$S_z = \sum_{i=1}^{N} Z_{TRLi} ,$$

$$S_{bb} = \sum_{i=1}^{N} b_{vehiclei} * b_{vehiclei} ,$$

$$S_{bz} = \sum_{i=1}^{N} b_{vehiclei} * Z_{TRLi} \qquad \text{and} \qquad S_{zz} = \sum_{i=1}^{N} Z_{TRLi} * Z_{TRLi} ,$$

wherein $Z_{TRLi}$, is a value from the time sequence of the propulsive forces and $b_{vehiclei}$ is a value from the time sequence of the vehicle longitudinal accelerations.

**Revendications**

**1.** Procédé pour la détermination de la masse d'un véhicule déplacé par des forces de propulsion dans sa direction longitudinale présentant les caractéristiques suivantes :

-   à l'aide d'un capteur, des signaux en corrélation avec une force propulsion et avec une accélération longitudinale correspondante du véhicule sont enregistrés à des moments successifs, les signaux ($Z_{TRL}$, $b_{Fzg}$) pour la force de propulsion et pour l'accélération longitudinale correspondante du véhicule étant enregistrés à des instants ($t_i$) se succédant de façon continue et avec des intervalles de temps ($\Delta t$) constants,
-   les signaux enregistrés aux instants successifs sont utilisés par un ordinateur pour la production d'un signal en corrélation avec la masse du véhicule, **caractérisé en ce que** les signaux ($Z_{TRL}$, $b_{Fzg}$) enregistrés en continu sont mémorisés successivement dans une mémoire (2), où ils forment une série chronologique pour les forces de propulsion successives et une série chronologique pour les accélérations longitudinales correspondantes du véhicule, un nombre (N) défini de plus de deux signaux ($Z_{TRLi}$, $b_{Fzgi}$) successifs et mémorisés des séries chronologiques étant lu dans la mémoire (2) et utilisé par l'ordinateur (1) pour la génération du signal ($m_{Fzg}$) en corrélation avec la masse instantanée du véhicule, l'ordinateur (1) traitant les signaux ($Z_{TRLi}$, $b_{Fzgi}$) entrés dans la mémoire (2) avec l'utilisation d'un procédé linéaire de calcul de régression, et ceci étant soumis à un contrôle d'acceptation avant une analyse du signal ($m_{Fzg}$) généré pour la masse du véhicule,

    une dispersion de valeurs d'abscisse ($\sigma_b$), qui représente une valeur calculée selon l'équation

$$\sigma_b{}^2 = S_{bb}/N - (S_b/N)^2$$

étant utilisée comme contrôle d'acceptation, l'acception du signal ($m_{Fzg}$) généré pour la masse du véhicule augmentant avec la dispersion des valeurs d'abscisse, et/ou un coefficient de corrélation (R), qui représente une valeur calculée selon l'équation

$$R^2 = \frac{(S_{bz} - S_b * S_z / N)^2}{(S_{bb} - S_b . S_b / N)*(S_{zz} - S_z . S_z / N)}$$

étant vérifié comme contrôle d'acceptation, l'acceptation du signal ($m_{Fzg}$) pour la masse du véhicule augmentant également avec le coefficient de corrélation (R) croissant,
les termes de sommes ($S_b$, $S_z$, $S_{bb}$, $S_{bz}$ et $S_{zz}$) contenus dans les équations étant calculés de la façon suivante :

$$S_b = \sum_{i=1}^{N} b_{Fzgi} \quad,$$

$$S_z = \sum_{i=1}^{N} Z_{TRLi} \quad,$$

$$S_{bb} = \sum_{i=1}^{N} b_{Fzgi} * b_{Fzgi} \quad,$$

$$S_{bz} = \sum_{i=1}^{N} b_{Fzgi} * Z_{TRLi} \qquad \text{et} \qquad S_{zz} = \sum_{i=1}^{N} Z_{TRLi} * Z_{TRLi}$$

$Z_{TRLi}$ étant une valeur provenant de la série chronologique des forces de propulsion et $b_{Fzgi}$ une valeur provenant de la série chronologique des accélérations longitudinales du véhicule.

**2.** Procédé selon la revendication 1,
   **caractérisé en ce que**,
   le signal ($m_{Fzg}$) pour la masse du véhicule représentant une valeur calculée selon l'équation

$$m_{Fzg} = \frac{S_{bz} - S_z * S_b / N}{S_{bb} - S_b * S_b / N}$$

**3.** Procédé selon la revendication 1,
   **caractérisé en ce que**,
   pour la génération des termes de sommes ($S_b$, $S_z$, $S_{bb}$, et $S_{bz}$), on utilise un système de mémoire en couronne, avec lequel les sommes actuelles sont réduites de l'opérande le plus ancien provenant de la série chronologique concernée et sont augmentées de l'opérande le plus récent provenant de la série chronologique concernée.

**4.** Procédé selon l'une quelconque des revendications 1 à 3,
   **caractérisé en ce que**,
   le signal ($Z_{TRL}$) est en corrélation avec une force de propulsion, qui est formée de la force de traction ou de freinage ($Z_T$) agissant sur le véhicule déduction faite de la force de résistance au roulement ($Z_R$) et de la force de résistance de l'air ($Z_L$).

**5.** Procédé selon l'une quelconque des revendications 1 à 4,
   **caractérisé en ce que**,
   le nombre ($N$) des valeurs, utilisées pour la détermination du signal ($m_{Fzg}$) pour la masse du véhicule, des séries chronologiques est choisi de telle sorte que le produit de ce nombre ($N$) et de l'intervalle de temps ($\Delta t$) de deux instants ($t_i$) successifs donne un laps de temps supérieur à la période de vibration de la vibration qui présente la plus faible fréquence dans une branche d'entraînement du véhicule.

**6.** Procédé selon la revendication 1,
   **caractérisé en ce que**,
   une valeur limite pour la dispersion des valeurs d'abscisse ($\sigma_b$) est déposée dans la mémoire (2), au-dessous de laquelle on n'a pas une analyse du signal ($m_{Fzg}$) généré et en corrélation avec la masse du véhicule.

**7.** Procédé selon la revendication 1,
   **caractérisé en ce que**,
   une valeur limite pour le coefficient de corrélation ($R$) est calculée de façon continue à partir de signaux ($m_{Fzg}$) précédents et acceptés pour la masse du véhicule et est déposée dans la mémoire (2), au-dessous de laquelle on n'a pas une analyse du signal ($m_{Fzg}$) généré actuellement pour la masse du véhicule.

**8.** Procédé selon l'une quelconque des revendications précédentes,
   **caractérisé en ce que**,
   le signal ($m_{Fzg}$) généré et en corrélation avec la masse du véhicule est utilisé pour la production d'un signal (s) en corrélation avec la pente de la chaussée.

**9.** Procédé selon la revendication 8,
   **caractérisé en ce que**,
   le signal (s) pour la pente du véhicule représente une valeur calculée selon le système d'équations suivant

$$Z_{HAi} = Z_{TRLi} - m_{Fzg} * b_{Fzgi} = m_{Fzg} * g * \sin(S_i)$$

$Z_{HAi}$ = force descensionnelle de pente

g = accélération terrestre

10. Procédé selon la revendication 8 ou 9,
    **caractérisé en ce que**,
    des signaux ($s_i$) successifs pour la pente de la chaussée sont lissés par un procédé de filtre passe-bas.

11. Procédé selon la revendication 1,
    **caractérisé en ce que**,
    à partir du coefficient de corrélation (R) et de la dispersion des valeurs d'abscisse ($\sigma_b$), on détermine un facteur de pondération qui prend en compte la qualité des résultats individuels pour une valeur moyenne pondérée des signaux individuels générés pour la masse du véhicule ($m_{Fzg}$).

12. Dispositif pour la détermination de la masse d'un véhicule déplacé par les forces de propulsion dans sa direction longitudinale, le dispositif disposant d'un capteur, à l'aide duquel on enregistre à des instants successifs des signaux en corrélation avec une force de propulsion et avec une accélération longitudinale correspondante du véhicule, les signaux ($Z_{TRL}$, $b_{Fzg}$) pour la force de propulsion et pour l'accélération longitudinale correspondante du véhicule étant enregistrés à des instants ($t_i$) se succédant de façon continue et à des intervalles de temps ($\Delta t$) constants, le dispositif comprenant un ordinateur (1) et une mémoire (2), l'ordinateur (1) utilisant les signaux enregistrés aux instants successifs pour la génération d'un signal en corrélation avec la masse du véhicule, **caractérisé en ce que**
    les signaux ($Z_{TRL}$, $b_{Fzg}$) enregistrés de façon continue sont mémorisés les uns après les autres dans la mémoire (2) où ils forment une série chronologique pour les forces de propulsion successives et une série chronologique pour les accélérations longitudinales correspondantes du véhicule, un certain nombre (N) de plus de deux signaux ($Z_{TRLi}$, $b_{Fzgi}$) successifs et mémorisés des séries chronologiques étant lu dans la mémoire (2) et étant utilisé par l'ordinateur (1) pour la génération du signal ($m_{Fzg}$) en corrélation avec la masse instantanée du véhicule, l'ordinateur (1) traitant les signaux ($Z_{TPLi}$, $b_{Fzgi}$) entrés dans la mémoire (2) avec l'utilisation d'un procédé linéaire de calcul de régression, et ceci étant soumis à un contrôle d'acceptation avant une analyse du signal ($m_{Fzg}$) généré pour la masse du véhicule, une dispersion de valeurs d'abscisse ($\sigma_b$), qui représente une valeur calculée selon l'équation suivante

$$\sigma_b{}^2 = S_{bb}/N - (S_b/N)^2,$$

étant utilisée comme contrôle d'acceptation, l'acceptation du signal ($m_{Fzg}$) généré pour la masse du véhicule croissant avec la dispersion des valeurs d'abscisse et/ou un coefficient de corrélation (R), qui représente une valeur calculée selon l'équation suivante

$$R^2 = \frac{(S_{bz} - S_b * S_z / N)^2}{(S_{bb} - S_b \cdot S_b/N)*(S_{zz} - S_z \cdot S_z / N)},$$

étant vérifié comme contrôle d'acceptation, l'acceptation du signal ($m_{Fzg}$) généré pour la masse du véhicule croissant également avec le coefficient de corrélation (R) croissant, les termes de sommes ($S_b$, $S_z$, $S_{bb}$, $S_{bz}$ et $S_{zz}$) contenues dans les équations étant calculés de la façon suivante :

$$S_b = \sum_{i=1}^{N} b_{Fzgi} \quad,$$

$$S_z = \sum_{i=1}^{N} Z_{TRLi} \quad,$$

**15**

$$S_{bb} = \sum_{i=1}^{N} b_{Fzgi} * b_{Fzgi} \quad ,$$

$$S_{bz} = \sum_{i=1}^{N} b_{Fzgi} * Z_{TRLi} \qquad \text{et} \qquad S_{zz} = \sum_{i=1}^{N} Z_{TRLi} * Z_{TRLi}$$

($Z_{TRLi}$) étant une valeur provenant de la série chronologique des forces de propulsion et
($b_{Fzgi}$) une valeur provenant de la série chronologique des accélérations longitudinales du véhicule.

$( Z_{TRL1} , Z_{TRL2} , \ldots Z_{TRLN} )$

$( b_{Fzg1} , b_{Fzg2} , \ldots b_{FzgN} )$

2

$Z_{TRLi}$ 3

$\mu c$

$b_{Fzgi}$

1 4

$m_{Fzg} , s$

5 6 7 B